# EUROPEAN PATENT APPLICATION

(11) **EP 4 488 060 A1**
(43) Date of publication of application: **08.01.2025**
(21) Application number: 23760035.8
(22) Date of filing: 22.02.2023
(51) Int. Cl.: B32B 7/12, B32B 3/18, B32B 5/26, B32B 27/06, C09J 7/00, D06M 17/00

(54) **BONDED ARTICLE**

(30) Priority: 28.02.2022 JP 2022028976
(71) Applicant: Toray Industries, Inc., Tokyo 103-8666 (JP)
(72) Inventor: KIDO Tatsuya, Tokyo 103-8666 (JP); MURAKAMI Yasuharu, Otsu-shi, Shiga 520-2141 (JP); TANIGUCHI, Takamitsu, Tokyo 103-8666 (JP)
(74) Representative: Mewburn Ellis LLP
(86) International application number: PCT/JP2023/006437
(87) International publication number: WO 2023/163036

(57) **Abstract**

To provide a bonded article having excellent adhesive strength, capable of combining adherends having different configurations, and also having excellent productivity, a bonded article of the present invention includes at least a first adherend, a second adherend, and an adhesive material interposed between the first adherend and the second adherend, in which the adhesive material includes at least a first adhesive resin layer, a second adhesive resin layer, and a base material layer interposed between the first adhesive resin layer and the second adhesive resin layer, the first adhesive resin layer is in contact with the first adherend, the second adhesive resin layer is in contact with the second adherend, a peel strength of the first adherend measured on the basis of JIS L1086 (2020) 7.10 is lower than a peel strength of the second adherend, and a surface area of the second adhesive resin layer is smaller than a surface area of the first adhesive resin layer.

## Description

### TECHNICAL FIELD

The present invention relates to a bonded article.

### BACKGROUND ART

Conventionally, various bonded articles in which fiber adherends are bonded without stitching with a sewing machine are commercially available. As these bonding methods, a bonding method in which an adhesive is interposed between stacked adherends to bond the adherends, and a bonding method in which stacked adherends are melted and solidified to be welded are used.

As a bonded article in patent documents, a fiber product is known in which a thermal adhesive tape including a urethane-based resin, an acrylic resin, a silicon-based resin or the like as an adhesive is inserted between stacked adherends, and the adhesive of the thermal adhesive tape is melted and solidified by thermocompression bonding to bond the adherends to each other (Patent Documents 1 and 2). However, in conventional bonding using an adhesive, peeling of the bonding portion, that is, peeling is likely to occur when the bonding portion is pulled or repeatedly washed, and thus it is difficult to secure strength equivalent to that of sewing machine stitching.

To improve this problem, there is disclosed a technique (Patent Document 3) of using attachment fabric pieces having a dot-shaped bonding portion made of an adhesive resin on one surface thereof, and disposing the mounting cloths such that the surfaces of the mounting cloths on a side where the bonding portion is not provided face each other, and joining the mounting cloths so as to be aligned in the longitudinal direction, thereby imparting conformity to a surface material and distributing tensile stress on the bonding portion.

### PRIOR ART DOCUMENTS

### PATENT DOCUMENTS

Patent Document 1: Japanese Patent Laid-open Publication No. 2002-338908
Patent Document 2: Japanese Patent Laid-open Publication No. 2009-67977
Patent Document 3: Japanese Patent Laid-open Publication No. 2009-279192

### SUMMARY OF THE INVENTION

### PROBLEMS TO BE SOLVED BY THE INVENTION

However, the mounting cloth having a dot-shaped adhesive resin portion on one surface thereof and an article obtained by disposing the mounting cloths such that the surfaces of the mounting cloths on a side where the bonding portion is not provided face each other, and joining the mounting cloths so as to be aligned in the longitudinal direction, described in Patent Document 3, require a step of preparing the mounting cloths after application for the number of bonding surfaces, a step of joining the mounting cloths after application, and a step of joining the mounting cloths to an adherend in the production step, and thus is poor in productivity, and also have a problem that thickness due to layering of the mounting cloths facing each other at the bonding portion is likely to cause hardening of the texture.

As described above, none of the conventional bonded articles can satisfy sufficient performance in adhesive strength, productivity, and texture of the bonding portion.

Therefore, an object of the present invention is to solve the above conventional problems, and
to provide a bonded article having excellent adhesive strength, capable of combining adherends having different configurations, and also having excellent productivity.

### SOLUTIONS TO THE PROBLEMS

In order to solve the above problems, a bonded article of the present invention has the following configurations.

(1) A bonded article including at least a first adherend, a second adherend, and an adhesive material interposed between the first adherend and the second adherend,
   in which the adhesive material includes at least a first adhesive resin layer, a second adhesive resin layer, and a base material layer interposed between the first adhesive resin layer and the second adhesive resin layer,
   the first adhesive resin layer is in contact with the first adherend,
   the second adhesive resin layer is in contact with the second adherend,
   a peel strength of the first adherend measured on the basis of JIS L1086 (2020) 7.10 is lower than a peel strength of the second adherend, and
   a surface area of the second adhesive resin layer is smaller than a surface area of the first adhesive resin layer.
(2) The bonded article according to (1), wherein a ratio of the surface area of the second adhesive resin layer to the surface area of the first adhesive resin layer is 10% or more and 70% or less.
(3) The bonded article according to (1) or (2), wherein in the first adherend and the second adherend, a ratio of the peel strength of the first adherend to the peel strength of the second adherend measured on the basis of JIS L1086 (2020) 7.10 is 5% or more and 90% or less.
(4) The bonded article according to any one of (1) to (3), wherein the first adherend and the second adherend are selected from at least a fiber woven or knitted fabric, a nonwoven fabric, and a film.
(5) The bonded article according to any one of (1) to (4), wherein a ratio of a dimension of the base material layer to a dimension of the first adhesive resin layer in a short side direction of the adhesive material is 100% or more and 150% or less.

### EFFECTS OF THE INVENTION

According to the present invention, it is possible to obtain a bonded article having excellent adhesive strength and excellent productivity.

### BRIEF DESCRIPTION OF THE DRAWINGS

Fig. 1 is a schematic view of a cross section of a bonded article of the present invention.
Fig. 2 is a perspective view of an adhesive material as viewed from a first adhesive resin layer.
Fig. 3 is a perspective view of an adhesive material as viewed from a second adhesive resin layer.
Fig. 4 is a cross-sectional view of one aspect of the bonded article.
Fig. 5 is a front view of one aspect of the bonded article.
Fig. 6 is a conceptual view showing an aspect in which the shape of a first adhesive resin layer 4a and/or a second adhesive resin layer 4b is formed in a dot shape.
Fig. 7 is a cross-sectional view of the adhesive material at the moment of peeling off a first adherend and a second adherend of a bonding portion.
Fig. 8 is a cross-sectional view of the adhesive material in the middle of peeling off the first adherend and the second adherend of the bonding portion.

### EMBODIMENTS OF THE INVENTION

Hereinafter, a bonded article of the present invention will be described in detail with reference to the drawings.

### <Configuration of bonded article>

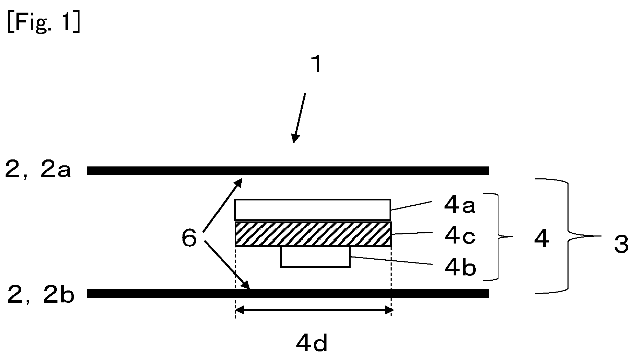

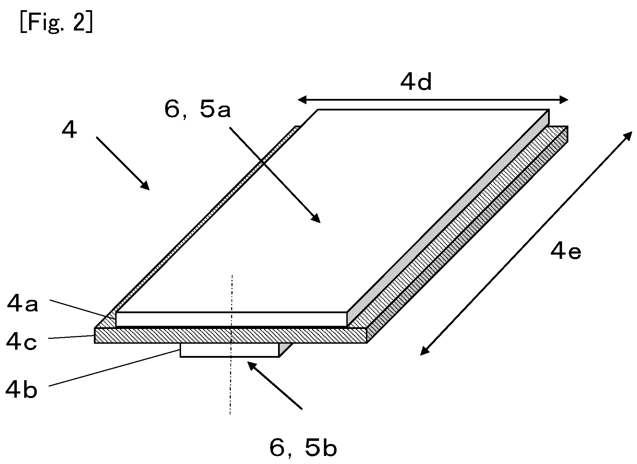

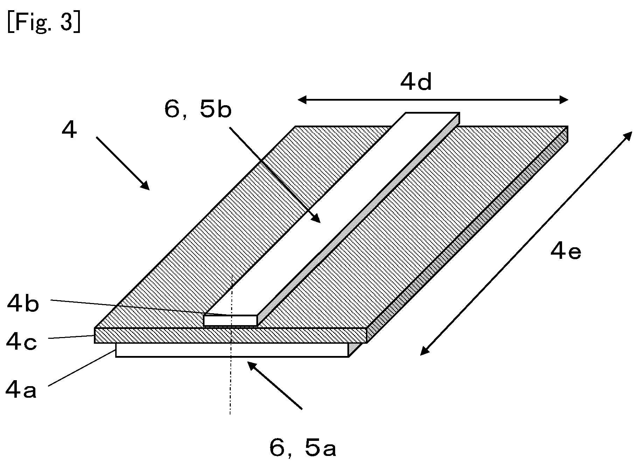

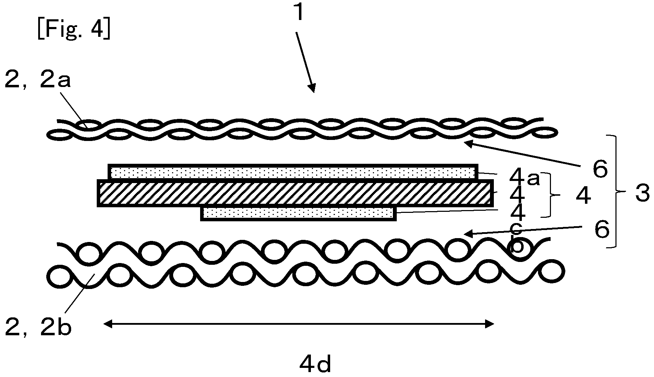

Fig. 1 shows an outline of the cross section of the bonded article of the present invention. Fig. 2 is a perspective view of the adhesive material as viewed from the first adhesive resin layer. Fig. 3 is a perspective view of the adhesive material as viewed from the second adhesive resin layer. Fig. 4 shows a cross-sectional view of one aspect of the bonded article.

A bonded article 1 includes an adherend 2 and an adhesive material 4.

The adherend 2 includes at least two of a first adherend 2a and a second adherend 2b.

The adhesive material 4 includes a base material layer and an adhesive resin layer. The adhesive material 4 is formed by disposing a first adhesive resin layer 4a on one surface of a base material layer 4c and disposing a second adhesive resin layer 4b on the other surface of the base material layer 4c.

The first adhesive resin layer 4a of the adhesive material 4 is in contact with the first adherend 2a, and the second adhesive resin layer 4b of the adhesive material 4 is in contact with the second adherend 2b on a bonding surface 6.

### <Bonding mechanism>

The mechanism of excellent adhesive strength in the bonded article of the present invention is not clear, but is presumed as follows.

The elements constituting the adhesive strength of the bonded article 1 are divided into two elements of the adhesive strength of the material itself of the adherend 2, that is, the peel strength of the first adherend 2a and the peel strength of the second adherend 2b; and the adhesive strength between the adhesive material 4 and the first adherend 2a and the second adherend 2b, that is, the peel strength of the bonded article 1 itself.

In the adherend 2, when the first adherend 2a and the second adherend 2b have different materials and shapes, the adhesive strengths at the boundary surfaces of the adhesive material 4 facing each adherend 2 are different. The adhesive strength of the bonded article 1 depends on the lowest strength among the adhesive strengths at the respective boundary surfaces.

For example, in a case where the peel strength of the first adherend 2a is lower than the peel strength of the second adherend 2b, and the resin layer of the adhesive material 4 is a single layer, that is, a monolayer, the adhesive strength at the boundary surface between the first adherend 2a and the first adhesive resin layer 4a is lower than the adhesive strength at the boundary surface between the second adherend 2b and the second adhesive resin layer 4b when a tensile force or a peel force is applied to the bonded article 1. Due to this magnitude relationship of the adhesive strength, peeling occurs first at the boundary surface between the first adherend 2a and the first adhesive resin layer 4a.

For example, when a peel force is applied in the bonding portion 3 as in the bonded article shown in Fig. 1, the order in which the force inside the adhesive material 4 is applied varies depending on the magnitude relationship between a surface area 5a of the first adhesive resin layer and a surface area 5b of the second adhesive resin layer constituting the adhesive material 4. For example, when a peel force is applied in a short side direction 4d of the adhesive material, the force is first applied to a side of the adhesive resin having a small surface area in the short side direction 4d of the adhesive material and the outer edge portion side facing the peeling direction. Then, the same force is applied to the adhesive resin layer located on a side opposite to the adhesive resin layer having a small surface area, with the base material layer 4c interposed between the adhesive resin layers.

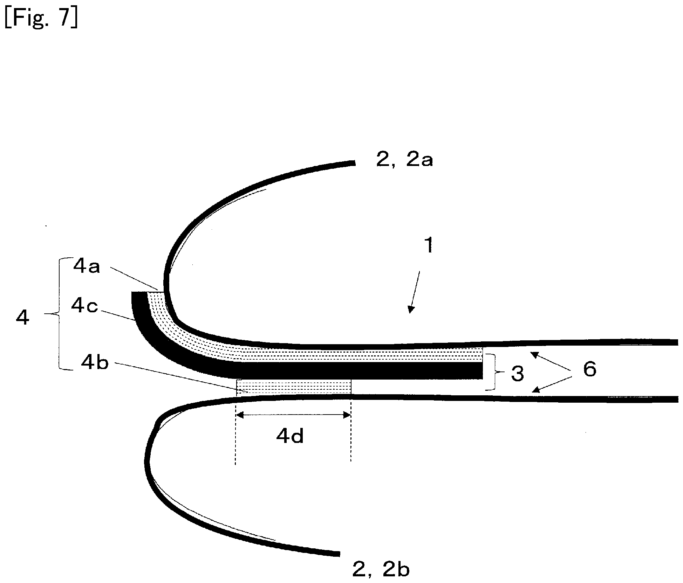

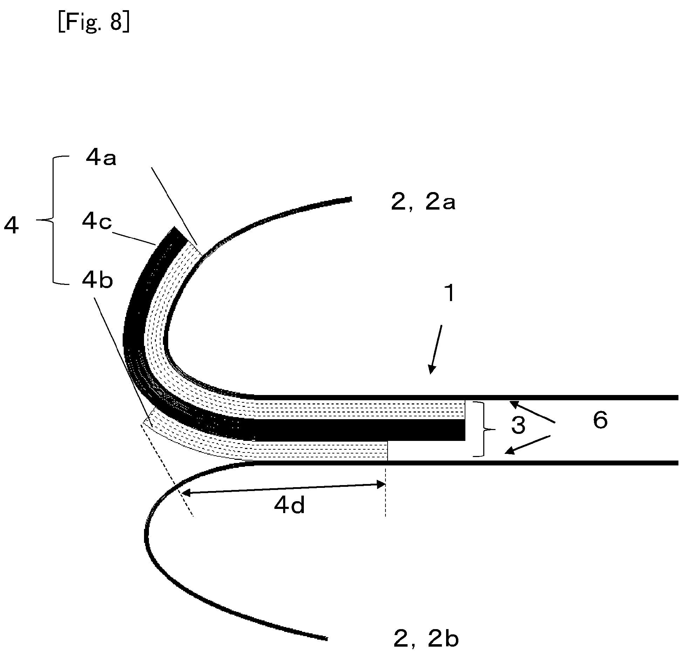

Hereinafter, the peeling behavior in a case where the adhesive material 4 has the first adhesive resin layer, the second adhesive resin layer, and the base material layer interposed between the first adhesive resin layer and the second adhesive resin layer will be considered by taking the bonded article 1 shown in Fig. 4 as an example. When a peel force is applied so as to peel off the first adherend 2a and the second adherend 2b from the left side with respect to Fig. 4, the peel force is applied in the left direction of the short side direction 4d of the adhesive material. This point will be further described with reference to Figs. 7 and 8. Fig. 7 is a cross-sectional view of the adhesive material at the moment of peeling off the first adherend and the second adherend of the bonding portion. Fig. 8 is a cross-sectional view of the adhesive material in the middle of peeling off the first adherend and the second adherend of the bonding portion.

When the first adherend 2a and the second adherend 2b are peeled off, since the surface area 5a of the first adhesive resin layer is larger than the surface area 5b of the second adhesive resin layer, as shown in Fig. 7, the first adhesive resin layer 4a and the base material layer 4c follow the first adherend 2a, and the peel force is applied between the left edge of the second adhesive resin layer 4b and the second adherend 2b.

In this state, in the vicinity of the left edge of the first adhesive resin layer 4a, a force is applied so that the first adhesive resin layer 4a and the first adherend 2a are peeled so as to be shifted in the same direction, that is, be in a so-called shear peeling state, and resistance to peeling is increased by application of shear resistance.

When a peel force is further applied to the first adherend 2a and the second adherend 2b, peeling occurs between the left edge of the second adhesive resin layer 4b and the second adherend 2b in the adhesive material 4, as shown in Fig. 8.

That is, in the vicinity of the left edge of the first adhesive resin layer 4a, a force is applied so that the first adhesive resin layer 4a and the first adherend 2a are brought into a so-called shear peeling state where both are peeled so as to be shifted in the same direction. Meanwhile, on the second adherend 2b side, a peel force is applied to the vicinity of the left edge of the second adhesive resin layer 4b, and the peel force is applied such that the left side of the second adherend 2b is separated from the adhesive material 4.

As described above, the peel force to be applied to the bonded article varies depending on the magnitude relationship between the surface area 5a of the first adhesive resin layer and the surface area 5b of the second adhesive resin layer constituting the adhesive material 4. By adjusting the magnitude relationship, the order in which the peel force is applied can be changed and distributed.

In addition, when the same adherend and adhesive resin layer are used, the adhesive force at shear peeling where peeling occurs so as to be shifted in the same direction is higher than the adhesive force when a peel force is applied in the 90° direction.

Considering the elements constituting the adhesive strength of the bonded article of the present invention based on the above descriptions, when the shear peel strength on the first adherend side is greater than the peel strength on the second adherend side, the peel strength on the second adherend side affects the peel strength of the bonded article itself. Even when the shear peel strength on the first adherend side is smaller than the peel strength on the second adherend side, the shear peel strength on the first adherend side affects the peel strength of the bonded article itself. The former case is common as long as the difference in adhesive strength between the first adherend and the second adherend is not extremely large. In any case, the peel strength of the second adherend is larger than the peel strength of the first adherend, and thus the adhesive strength of the bonded article of the present invention itself is higher than the adhesive strength of the bonded article when the resin layer of the adhesive material 4 is a single layer.

As described above, in the present invention, the adhesive strength between the first adherend and the first adhesive resin layer is raised by using the above-described adhesive material 4 even when a first adherend having low adhesive strength is used, and as a result, the peel strength of the bonded article 1 itself can be increased.

### <Preferred embodiment of bonded article 1>

In the present invention, the peel strength of the first adherend 2a is smaller than the peel strength of the second adherend 2b, and the surface area 5b of the second adhesive resin layer 4b in the adhesive material 4 is smaller than the surface area 5a of the first adhesive resin layer 4a. As a result, the load or peel force applied to the bonded article 1 is deflected to the second adhesive resin layer 4b having a high peel strength, so that the distribution of load to the first adhesive resin layer 4a and improvement in the peeling durability can be achieved, that is, the adhesive strength of the bonded article 1 is excellent.

The peel strength of the adherend 2 as used herein is measured on the basis of JIS L1086 (2020) 7.10.1. In the measurement of the peel strength of the first adherend 2a, the first adherend 2a is used as a fabric to be bonded, and in the measurement of the peel strength of the second adherend 2b, the second adherend 2b is used as a fabric to be bonded.

When the magnitude relationship of the peel strength between the first adherend 2a and the second adherend 2b is reverse, or when the magnitude relationship between the surface area 5a of the first adhesive resin layer and the surface area 5b of the second adhesive resin layer is reverse, the load or the peel force to be applied to the bonded article 1 is deflected to the first adhesive resin layer 4a on the side where the peel strength is low, so that peeling easily occurs and the adhesive strength of the bonded article 1 is poor.

A suitable range of the ratio of the peel strength of the first adherend 2a to the peel strength of the second adherend 2b (hereinafter, referred to as "peel strength ratio") is 5% or more and 90% or less. Peel strength ratio = peel strength (N/cm) of first adherend 2a ÷ peel strength (N/cm) of second adherend 2b

When the peel strength ratio is 5% or more, the difference in peel strength between the first adhesive resin layer 4a and the second adhesive resin layer 4b falls within a preferable range, so that the tensile load or the peel force is less likely to remain in the first adhesive resin layer 4a, and the effect of improving the adhesive strength of the bonded article 1 is particularly excellent. On the other hand, when the peel strength ratio is 90% or less, the difference in peel strength between the first adhesive resin layer 4a and the second adhesive resin layer 4b falls within a preferable range, so that the tensile load and the peel force of the first adhesive resin layer 4a on the side where the peel strength is low can be sufficiently distributed and deflected, and the effect of improving the adhesive strength of the bonded article 1 is excellent. The peel strength ratio is more preferably 10% or more and 60% or less.

As a means for providing a difference in peel strength, any method may be used, such as providing a difference in bulkiness or surface roughness of the surface of the first adherend 2a and the second adherend 2b, that is, a difference in anchor effect, providing a difference in tensile elasticity, or providing a difference in melting point or viscosity of raw materials. From the viewpoint of specification versatility, it is preferable to provide a difference in bulkiness and surface roughness.

As a more preferred embodiment of the bonded article 1 in the present invention, a preferable range of the ratio of the surface area 5b of the second adhesive resin layer to the surface area 5a of the first adhesive resin layer of the adhesive material 4 (hereinafter, referred to as "surface area ratio") is 10% or more and 70% or less. The surface area as used herein is the area of the surface of the adhesive resin layer on the bonding surface 6 side, and corresponds to the area where each adhesive resin layer bonds to each adherend. Surface area ratio = [surface area 5b (cm2) of second adhesive resin layer ÷ surface area 5a (cm2) of first adhesive resin layer] × 100 (%)

Surface area 5a of first adhesive resin layer: a product of the short side dimension of the first adhesive resin layer 4a in the short side direction 4d of the adhesive material 4 and the long side dimension of the first adhesive resin layer 4a in the long side direction 4e of the adhesive material 4, shown in Figs. 2 and 3.

Surface area of second adhesive resin layer 4b: a product of the short side dimension of the second adhesive resin layer 4b in the short side direction 4d of the adhesive material 4 and the long side dimension of the second adhesive resin layer 4b in the long side direction 4e of the adhesive material 4, shown in Figs. 2 and 3.

When the surface area ratio is 10% or more, the surface area difference between the first adhesive resin layer 4a and the second adhesive resin layer 4b falls within a preferable range, so that the tensile load or the peel force of the second adhesive resin layer 4b is easily distributed, and the effect of improving the adhesive strength of the bonded article 1 is particularly excellent. On the other hand, when the surface area ratio is 70% or less, the surface area difference between the first adhesive resin layer 4a and the second adhesive resin layer 4b falls within a preferable range, so that the tensile load and the peel force of the first adhesive resin layer 4a on the side where the peel strength is low can be sufficiently distributed and deflected, and the effect of improving the adhesive strength of the bonded article 1 is excellent. The surface area ratio is more preferably in the range of 30% or more and 60% or less.

As a means for providing the surface area ratio, as shown in Fig. 2, any method may be used, such as providing a difference between the dimension of the first adhesive resin layer 4a and the dimension of the second adhesive resin layer 4b in the short side direction 4d of the adhesive material 4, or providing a difference between the dimension of the first adhesive resin layer 4a and the dimension of the second adhesive resin layer 4b in the long side direction 4e of the adhesive material 4. From the viewpoint that the difference in appearance between the front and back of the bonded article 1 is less likely to be visually recognized, that is, appearance quality, it is preferable to provide a difference between the dimension of the first adhesive resin layer 4a and the dimension of the second adhesive resin layer 4b in the short side direction of the adhesive material 4.

In the bonded article 1 of the present invention, the shape of the first adhesive resin layer 4a or/and the second adhesive resin layer 4b of the adhesive material 4 may be a dot shape or an intermittent shape in which the resins are not continuous, or a zigzag shape. The dot shape may be a circular shape, a polygonal shape, or the like without any limitation, but is preferably a circular shape from the viewpoint of versatility and quality stability of the corresponding facility. The intermittent shape may be a plurality of straight lines or a dotted line. In particular, when at least one of the first adherend 2a or the second adherend 2b has stretchability, it is preferable that the adhesive resin is intermittently present in the stretching direction. In the case of a knitted fabric or a woven fabric that stretches and contracts in both the warp direction and the weft direction, the dot shape is preferable from the viewpoint of excellent conformity in the stretching direction of the adherend.

As in the adhesion mechanism described above, the area of the region where the adhesive resin in the form of a dot shape or the like exists affects the adhesive force. Therefore, the surface area of the first adhesive resin layer and the surface area of the second adhesive resin layer in this case are set to the area of the region where the adhesive resin in the form of a dot shape or the like exists. Specifically, a polygon or a circle that circumscribes a region where the adhesive resin in the form of a dot shape or the like exists and that has the largest number of contact points with the adhesive resin is assumed, and the area of the polygon or the circle is calculated. When the bonded article is a quilted product such as a down jacket in which a stuffing material such as batting or down feather is filled in surface fabric, a bonding portion provided as a partition of an insertion portion of the stuffing material is often a straight line or a curved line. In this case, in the sample collected from the bonded article, the smallest square such as a rectangle that circumscribes a region where the adhesive resin exists is assumed by the method described later, and the area of the rectangle is calculated.

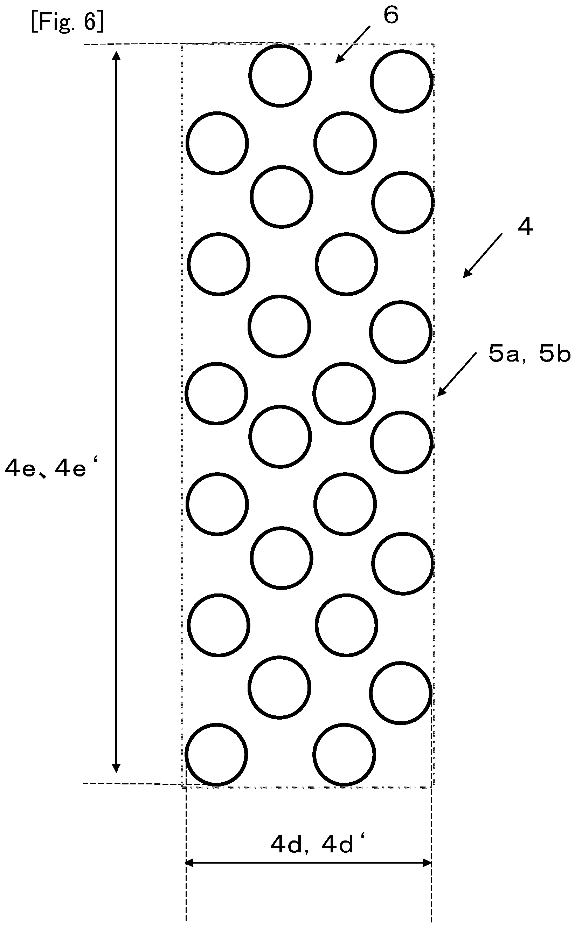

For example, the example shown in Fig. 6 is an aspect in which the first adhesive resin layer 4a and/or the second adhesive resin layer 4b are formed in a dot shape. The dimension in the short side direction 4d' of the adhesive resin layer in this aspect is the distance between the outermost edges in the short side direction 4d of the adhesive material. The dimension in the long side direction 4e' of the adhesive resin layer is the distance between the outermost edges in the long side direction 4e of the adhesive material.

In this case, a suitable range of the ratio of the surface area 5b of the second adhesive resin layer to the surface area 5a of the first adhesive resin layer (hereinafter, referred to as "surface area ratio") is 10% or more and 70% or less.

In the present invention, as the method for layering the first adhesive resin layer 4a, the second adhesive resin layer 4b, and the base material layer 4c in the adhesive material 4, a method of layering these components so that the centers of the components are aligned in the short side direction 4d' is preferably used from the viewpoint of providing an effect on peeling from both edges in the short side direction, but other methods may be used. For example, when the direction in which the peel force is applied is one direction, a layering method may also be employed in which, in the short side direction 4d or the long side direction 4e of each of the first adhesive resin layer 4a, the second adhesive resin layer 4b, and the base material layer 4c, the edges of the first adhesive resin layer 4a, the second adhesive resin layer 4b, and the base material layer 4c on a side opposite to the direction in which the peel force is applied are moved to one side in the short side direction 4d of the adhesive material, and the edges of the two layers of the base material layer 4c and the first adhesive resin layer 4a on only a side on which the peel force is applied protrude in the direction in which the peel force is applied. The shape of the bonding surface of the adhesive material is not limited to the shape having the short side and the long side as described above. The shape of the bonding surface can be appropriately changed in consideration of the design of the bonded article and the direction in which the peel force is assumed to be applied.

### <Preferred embodiment of adhesive resin>

In the present invention, as the type of the resin constituting the adhesive resin layer, organic adhesives are mainly used. The type of the organic adhesive is roughly classified into natural resin adhesives such as natural rubber casein; semi-synthetic adhesives such as cellulose acetate; and synthetic resin adhesives using polyurethane, acrylic, and the like. Synthetic resin adhesives are preferable in terms of processability and cost.

The resin component of the synthetic resin adhesive is further classified into resin types using polyurethane, polyester, polyvinyl alcohol, vinyl chloride, an acrylic resin, polyethylene, an ethylene-vinyl acetate polymer, a polyamide-based resin, a polyolefin-based resin, and the like; elastomer types using silicone rubber, nitrile rubber, and the like; and composite types such as a nylon-epoxy resin, and a vinyl-phenolic resin. A polyurethane-based resin, an acrylic resin, a nylon-based resin, an ethylene-vinyl acetate-based resin, a polycarbonate-based resin, and an olefin-based resin are more preferable because these resins have high processability, and exhibit excellent heat resistance, adhesive strength, and durability due to crosslinking reaction with water (moisture) contained in the air.

In the reaction form of the synthetic resin adhesive, there are dry curing types such as a water-soluble type, a latex type, and a dispersion type; chemical reaction types that are cured by crosslinking reaction by mixing of a main agent and a curing agent; heat melting types (thermoplastic hot melt) that are solid at normal temperature but are melted by heating and solidified by cooling; pressure-sensitive types that are a highly viscous fluid and are bonded when pressure is applied; and moisture-curable types (moisture-curable reactive hot melt) that are cured by reaction with moisture in the air.

More preferably, heat melting types (thermoplastic hot melt) or moisture-curable types (moisture-curable reactive hot melt) are preferable because these types have excellent adhesive strength at the boundary surface between the adherend 2 and the adhesive resin layer.

Overall, the resin component suitably used for the bonded article of the present invention is at least one component selected from a polyurethane-based resin, an acrylic resin, a nylon-based resin, an ethylene-vinyl acetate-based resin, a polycarbonate-based resin, and an olefin-based resin, and the reaction form of the resin is at least one selected from a moisture-curable reactive hot melt and a thermoplastic hot melt.

In the bonded article 1 of the present invention, it is acceptable that both the first adhesive resin layer 4a and the second adhesive resin layer 4b of the adhesive material 4 are made of different resin components, and the reaction form of one resin layer is a thermoplastic hot melt and the reaction form of the other resin layer is a moisture-curable reactive hot melt. For example, the resin component of the first adhesive resin layer 4a may be composed of an acrylic resin, the reaction form thereof may be composed of a thermoplastic hot melt, the resin component of the second adhesive resin layer 4b may be composed of a polyurethane resin, and the reaction form thereof may be composed of a moisture-curable reactive resin.

### <Preferred embodiment of base material of adhesive material>

The adhesive material 4 of the present invention includes the base material layer 4c and the adhesive resin layer. The adhesive material 4 is formed by disposing the first adhesive resin layer 4a on one surface of the base material layer 4c and disposing the second adhesive resin layer 4b on the other surface of the base material layer 4c. In the adhesive material 4, the surface area 5b of the second adhesive resin layer is smaller than the surface area 5a of the first adhesive resin layer.

In the above configuration, in a case where the adhesive material 4 and the adherend 2 are bonded to each other by hot pressing or the like, when an excessive amount of heat, pressure or time is applied, the melted first adhesive resin layer 4a may protrude from the base material layer 4c, adhere not only to the first adherend 2a side which is the original bonding surface 6 but also to the second adherend 2b side which is opposite to the first adherend 2a side, and inhibit the adhesive strength.

As a preferred embodiment of the base material layer 4c constituting the adhesive material 4 of the bonded article 1 of the present invention, the ratio of the dimension of the base material in the short side direction of the adhesive material 4 to the dimension of the first adhesive resin layer 4a in the short side direction of the adhesive material 4 (referred to as "dimensional ratio") is preferably 100 to 150%, from the viewpoint of preventing the adhesion of the first adhesive resin layer 4a to the second adherend 2b side and securing adhesive strength.

Dimensional ratio = [dimension of base material in short side direction of adhesive material 4 ÷ dimension of first adhesive resin layer 4a in short side direction of adhesive material 4] × 100 (%)

When the dimensional ratio is less than 100%, the first adhesive resin layer 4a tends to easily adhere to the second adherend 2b side and the adhesive strength tends to be poor, and conversely, when the dimensional ratio exceeds 150%, the base material is easily visually recognized in appearance and the aesthetic quality may be poor. The dimensional ratio is more preferably in the range of 100 to 120%.

As a means for providing a difference in dimension, any method may be used, such as a method of forming a base material with a predetermined dimension and then applying the first adhesive resin layer 4a onto the base material so as to be equal to or less than the dimension of the base material, or a method of applying the first adhesive resin layer 4a onto the entire surface of the base material, and then cutting this into a predetermined dimension. From the viewpoint of ease in adjustment of the dimensional ratio, a method of forming the base material with a predetermined dimension and then applying the first adhesive resin layer 4a onto the base material so as to be equal to or less than the dimension of the base material is preferable. The second adhesive resin layer can also be provided in the same manner as the first adhesive resin layer.

As a material of the base material layer 4c, it is preferable to mainly use a single material or a layered material of a fiber woven or knitted fabric, a nonwoven fabric, or a film from the viewpoint of excellent flexibility. A film or a high-density woven fabric is more preferable because the thickness of such a material is less likely to be visually recognized and excellent appearance quality is obtained.

The material is not limited, but a polyester-based polyurethane resin, a polyether-based polyurethane resin, a polycarbonate-based polyurethane resin, an acrylic resin, a polyester-based resin, or the like is preferably used.

As a more preferred embodiment, it is preferable that the component constituting the adhesive resin layer is easy to melt and the component constituting the base material layer 4c is difficult to melt under the heating processing temperature condition, from the viewpoint of excellent adhesiveness to the adherend and bonding process stability. As for the melting point temperature, it is preferable that the melting point temperature T₁ of the component of the base material layer 4c is higher than the melting point temperature T₂ of the component of the adhesive resin layer, from the viewpoint of shape stability at the time of the bonding process. When the melting point temperature T₁ of the component of the base material layer 4c is lower than the melting point temperature T₂ of the component of the adhesive resin layer, there is a problem that the component of the base material layer 4c melts first before the component of the adhesive resin layer melts at the time of the bonding process, which hinders bonding work. More preferably, the ratio (T₁/T₂) of the melting point temperature T₁ of the component of the base material layer 4c to the melting point temperature T₂ of the component of the adhesive resin layer is in the range of 1.1 to 2.5. The melting point temperature is measured using DMA Q800 manufactured by TA Instruments in a temperature raising/controlled force mode at a temperature raising rate of 10°C/min, and a temperature at which the deformation displacement significantly changes is defined as the melting point.

### <Preferred embodiment of adherend>

As a preferred embodiment of the adherend 2 in the present invention, it is preferable to mainly use any one of a fiber woven or knitted fabric, a nonwoven fabric, and a film, from the viewpoint of excellent versatility and flexibility in the bonding process. A fiber woven fabric or a knitted fabric is more preferable from the viewpoint of excellent strength. When a woven fabric is used, a plain weave, a twill weave, a satin weave, a modified weave thereof, a multiaxis weave, and the like are generally suitably used. When a knitted fabric is used, plain knitting, rib knitting, purl knitting, tricot, raschel, milanese, and the like are suitably used. When a nonwoven fabric is used, a papermaking method, a chemical bonding method, a thermal fusion method, a water jet punch method, a melt blow method, a flash spinning method, and the like are suitably used.

As the fiber raw material of the adherend 2, synthetic fibers such as polyester, nylon, polyurethane, polypropylene, polyethylene, and acryl, natural fibers such as cotton, and animal fibers such as wool are suitably used.

As the synthetic fiber, preferably used are polyamide fibers composed of polyamide homopolymers such as nylon 6·6, nylon 6, nylon 12 and nylon 4·6, or copolymerized polyamides obtained by copolymerization of nylon 6 and nylon 6·6, copolymerization of polyalkylene glycol, dicarboxylic acid, amine and the like with nylon 6; polyester fibers composed of polyester homopolymers such as polyethylene terephthalate and polybutylene terephthalate, or copolymerized polyesters obtained by copolymerization of isophthalic acid, 5-sodium sulfoisophthalic acid or aliphatic dicarboxylic acid such as adipic acid as an acid component; aramid fibers typified by copolymerization of paraphenylene terephthalamide and an aromatic ether; rayon fibers; polysulfone-based fibers; and the like.

Such fibers may contain various additives usually used for improving productivity or characteristics in the production process or the processing process of the original yarn. The fibers can contain, for example, a heat stabilizer, an antioxidant, a light stabilizer, a smoothing agent, an antistatic agent, a plasticizer, a thickener, a pigment, a flame retardant, an antibacterial agent, a heat storage agent, a water repellent, and a water absorbent.

### <More preferred embodiment of adherend>

As the adherend 2, a plurality of different materials may be used in combination according to a use environment or a purpose. For example, in applications and environments having a waterproof property such as rainwear of clothing and chemical protective clothing, when the first adherend 2a is used in a state of being exposed to the waterproof target side, it is acceptable that a nylon plain woven fabric subjected to waterproofing is used as the first adherend 2a and a nylon circular knitted fabric is used as the second adherend 2b.

As a more preferred embodiment of the adherend 2 in the above aspect, it is preferable that at least the bonding surface 6 of the first adherend 2a is coated with a resin, and the water resistance measured on the basis of the method specified in JIS L1092 (2020) 7.10 is 2,000 mmH₂O (19.6 kPa) or more, from the viewpoint of securing the waterproof property of the first adherend 2a and the bonded article 1 and easily increasing the adhesive strength.

When the water resistance is less than 2,000 mmH₂O (19.6 kPa), the waterproof property may be poor. More preferably, the water resistance is 10,000 mmH₂O (98.1 kPa) or more and 30,000 mmH₂O (294.2 kPa) or less.

The type of resin for coating the bonding surface 6 of the first adherend 2a is not limited, but a polyester-based polyurethane resin, a polyether-based polyurethane resin, a polycarbonate-based polyurethane resin, an acrylic resin, a polyester-based resin, or the like is preferably used. As a means for coating the bonding surface 6 of the first adherend 2a with a resin, a coating method or a lamination method is suitably used.

The coating method may be any method as long as it is a method of forming a film, such as a method of bonding a resin to the bonding surface 6 of the adherend 2 by dry-bonding or a method of subjecting a resin to wet-coagulation. In addition, silica addition, dry foaming by addition of a foaming agent, formation of porous polyurethane by wet-coagulation, provision of irregularities with an embossing roller, and the like can be employed in order to adjust the coefficient of static friction and reduce the weight. Titanium oxide, carbon black, a pigment, an antioxidant, an ultraviolet absorber, a light stabilizer, a flame retardant, and the like may be appropriately contained in the resin film.

In the present invention, in order to enhance the waterproof property of the bonded article 1, the waterproof property is imparted to the adherend 2 on the waterproof target side by resin coating, and the adherends 2 are bonded to each other with the adhesive material 4 interposed therebetween. As a result, it possible to provide a waterproof bonded article 1 in which the pierce of the adherend by conventional sewing machine stitching and the entry path of water from the pierced portion are eliminated.

### <Method of bonding process>

As a method for bonding the adherend 2 and the adhesive material 4 constituting the bonded article 1, a hot pressing method, a high frequency heating method, and an ultrasonic processing method are mainly suitably used, but any method may be used. The hot pressing method is more preferable in terms of being excellent in cost and productivity.

### <Application>

The application of the bonded article 1 of the present invention may be, for example, any of upper garments and lower garments, that is, use for garments, or may be a hat, a glove, a futon, a sheet, a curtain, a tent, a sleeping bag, an umbrella, and a bag.

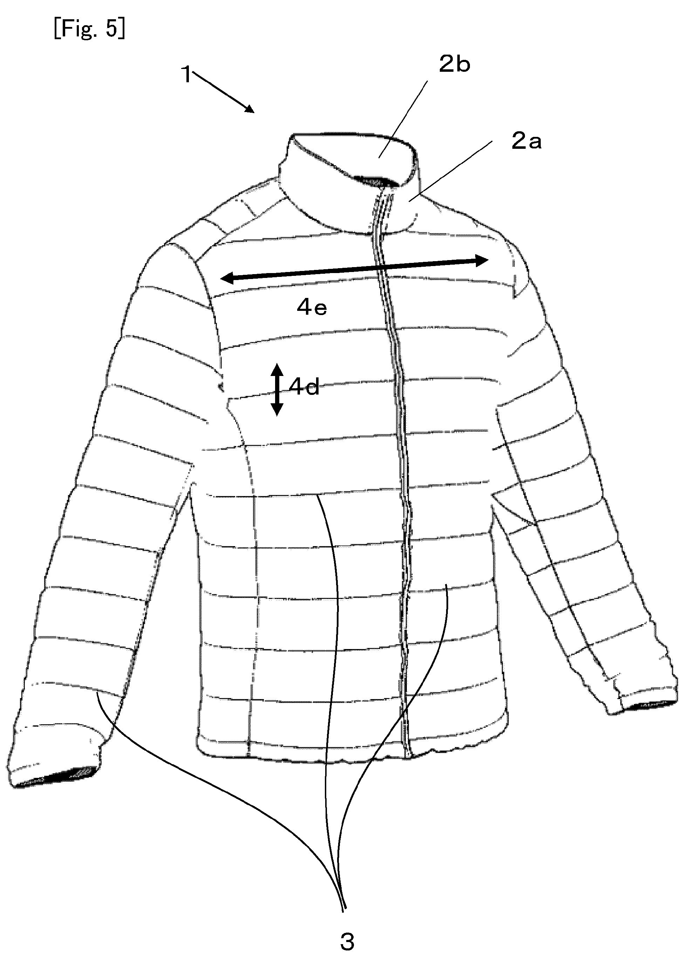

In these garments and the like, there may be a plurality of bonding portions where the adhesive material exists. For example, in the down jacket shown in Fig. 5, the down insertion portion is partitioned by the "bonding portion 3". In this case, all or a part of the bonding portion 3 can be an aspect of the present invention. More preferably, 50% to 100% in the bonding portion 3 in the garment is preferably an aspect of the present invention. Within the above range, peeling and breakage at the time of wearing the garment are reduced, which is preferable.

Further, the bonded article 1 of the present invention may be formed by combining sewn portions formed by a sewing machine. For example, in the garment shown in Fig. 5, the peripheral portion excluding the quilting can be a sewn portion formed by a sewing machine. In addition, it is also possible not to use a sewn portion formed by a sewing machine. That is, the present invention can be used as stitches for joining at least the adherends 2 to each other.

### EXAMPLES

Hereinafter, the present invention will be described more specifically with reference to Examples and Comparative Examples, but the present invention is not limited thereto. The bonded articles used in Examples and Comparative Examples were evaluated by the following methods.

### [Measurement]

### [Peel strength of adherend 2]

The peel strength of the adherend 2 of the bonded article 1 was measured in accordance with JIS L1086 (2020) 7.10.1. The fabric to be bonded in the measurement of the peel strength of the first adherend 2a was set to the first adherend 2a, and the fabric to be bonded in the measurement of the peel strength of the second adherend 2b was set to the second adherend 2b. The peel strength on the side where the adhesive material is bonded was measured for each of the fabrics. Urethane-based hot melt "αS23 (100 um)" manufactured by Toray Coatex Co., Ltd. was used as the adhesive of the present test. A test piece bonded under the conditions of a temperature of 140°C, a time of 10 seconds, and a pressure of 1 kg/cm² was prepared by hot flat plate pressing, and the peel strength was measured. The unit was N/cm.

### [Peel strength ratio between first adherend 2a and second adherend 2b]

The peel strength ratio between the first adherend 2a and the second adherend 2b was determined by the following formula. Peel strength ratio = [peel strength of first adherend 2a ÷ peel strength of second adherend 2b] × 100 (%)

### [Surface area ratio between second adhesive resin layer 4b and first adhesive resin layer 4a]

The surface area ratio between the second adhesive resin layer 4b and the first adhesive resin layer 4a was determined by the following formula. Surface area ratio = [surface area 5b of second adhesive resin layer ÷ surface area 5a of first adhesive resin layer] × 100 (%)

As shown in Figs. 2 and 3, the surface area 5a of the first adhesive resin layer was determined by measuring the dimension of the first adhesive resin layer 4a in the short side direction of the adhesive material 4 and the dimension of the first adhesive resin layer 4a in the long side direction of the adhesive material 4, and using the product of this and the respective values in the short side direction. The unit was cm².

The surface area 5b of the second adhesive resin layer was determined by measuring the dimension of the second adhesive resin layer 4b in the short side direction of the adhesive material 4 and the dimension of the second adhesive resin layer 4b in the long side direction of the adhesive material 4, and using the product of the respective values. The unit was cm².

In the following Examples and Comparative Examples, as described later, the dimension of the adhesive material in the long side direction was 50 cm in each of the first adhesive resin layer, the second adhesive resin layer, and the base material layer. In a case where each dimension is measured in a product of the bonded article, when a measurement sample is collected from an adhesive material or a bonded article to be measured, a sample having a size that includes the full length in the short side direction and a size that can be collected in the long side direction and that exceeds the size in the short side direction (in a case where it is difficult to collect the sample with this size, a size close to the size within a possible range) is cut out and collected. When the adhesive material is gently curved, a portion close to the straight line as much as possible is cut out and collected.

### [Dimensional ratio between base material and first adhesive resin layer 4a in short side direction of adhesive material 4]

The ratio between the dimension of the base material in the short side direction of the adhesive material 4 and the dimension of the first adhesive resin layer 4a in the short side direction of the adhesive material 4 was determined by the following formula. Dimensional ratio = [dimension of base material in short side direction of adhesive material 4 ÷ dimension of first adhesive resin layer 4a in short side direction of adhesive material 4] × 100 (%)

### [Peel strength of bonded article 1]

The peel strength of the bonded article 1 was determined by measuring the adhesive strength when the bonded article 1 was subjected to peeling, on the basis of the method A-1 specified in JIS L1093 (2011) 7.1.1. The unit was N/cm, and the peel strength was determined to one decimal place.

### [Evaluation]

### [Adhesion stability]

The adhesiveness of the bonded article was evaluated according to the criteria in Table 1. A higher parameter score indicates better adhesion stability.

### [Aesthetic quality]

The aesthetic quality of the bonded article, that is, the degree of visibility of the contour and the level difference were evaluated. Specifically, the degree of level difference and contour of the edge portion due to the thickness and hardness of the adhesive resin layer and the base material layer 4c of the bonded article 1, and the presence or absence of protrusion of the adhesive resin layer on the surface of the adherend, that is, the appearance quality was visually determined, and evaluated according to the criteria in Table 1. A higher parameter score indicates better aesthetic quality.

### [Overall evaluation]

The total of the evaluation scores of the adhesion stability and aesthetic quality as evaluation items was determined, and used as a comprehensive evaluation. A higher evaluation score indicates better overall quality, and a case where the evaluation result was two points or more was evaluated as a good bonded article. The evaluation criteria are shown in Table 2.

**[Table 1]**

| Score | Adhesion stability | Aesthetic quality | | |
|---|---|---|---|---|
| | | Evaluation | (1) Degree of level difference and contour of end portion | (2) Appearance quality |
| 3 | Peel strength of bonding portion: 20 N/cm or more | Very good | Level difference and contour of end portion of 4c are not observed, and recess corresponding to 4b can be clearly visually observed | Protrusion of adhesive resin layer to surface of adherend is not observed at all |
| 2 | Peel strength of bonding portion: 15 to 19.9 N/cm | Good | Level difference and contour of end portion of 4c are hardly observed, and recess corresponding to 4b can be visually observed | Protrusion of adhesive resin layer to surface of adherend is hardly observed |
| 1 | Peel strength of bonding portion: 10 to 14.9 N/cm | Slightly good | Level difference and contour of end portion of 4c are difficult to observe, and recess corresponding to 4b is slightly visually observed | It is difficult to observe protrusion of adhesive resin layer to surface of adherend |
| -1 | Peel strength of bonding portion: 5 to 9.9 N/cm | Slightly poor | Level difference and contour of end portion of 4c are partially observed | Protrusion of adhesive resin layer to surface of adherend can be partially visually observed |
| -2 | Peel strength of bonding portion: 1 to 4.9 N/cm | Poor | Level difference and contour of end portion of 4c are observed | Protrusion of adhesive resin layer to surface of adherend can be visually observed |
| -3 | Peel strength of bonding portion: less than 1 N/cm | Very poor | Level difference and contour of end portion of 4c are clearly observed | Protrusion of adhesive resin layer to surface of adherend can be clearly visually observed |

**[Table 2]**

| Score | Overall evaluation |
|---|---|
| 4 to 6 | Very good |
| 1 to 3 | Good |
| -3 to 0 | Poor |
| -4 to -6 | Very poor |

### (Example 1)

In the configuration of the bonded article, that is, the adherend shown in Figs. 2 to 4, as the first adherend, a nylon taffeta woven fabric, that is, a nylon fabric was obtained by weaving a plain woven fabric having a warp density of 207 yarns/2.54 cm and a weft density of 147 yarns/2.54 cm using a 16 dtex-5 f nylon filament yarns as the warp fibers and 33 dtex-26 f nylon filament yarns as the weft fibers, then subjecting the woven fabric to relaxation and scouring, circular dyeing at 130°C, and drying, and then subjecting the fabric to calendering at 180 degrees (upper)/60 degrees (lower).

As the second adherend, a nylon taffeta woven fabric, that is, a nylon woven fabric using 17 dtex-7 f nylon crimped filament textured yarns having a twist count of 500 twists/m and a bulkiness of 6 cm³/g as warp fibers and 26 dtex-20 f nylon crimped filament textured yarns as weft fibers, and finished to have a warp density of 250 yarns/2.54 cm and a weft density of 164 yarns/2.54 cm was obtained.

Next, in the configuration of the adhesive material, as the first adhesive resin layer adherend, an adhesive resin layer was obtained by using a polyurethane-based thermoplastic hot melt resin, that is, a resin mainly composed of a polyester-based polyurethane resin having a softening point of 60°C and a melting point temperature of 115°C and having hot-melt adhesiveness, and discharging the resin in a sheet shape onto a release paper and stretching the sheet by an extrusion method so as to have a film thickness of 100 µm, a stress at 50% elongation of 3.4 MPa, and a strength at break of 26.7 MPa, and then separating the stretched sheet from the release paper.

Next, as the second adhesive resin layer, a polyurethane-based thermoplastic hot melt resin was obtained by using the same raw material and production method as those of the first resin layer. Next, as the base material layer, a film was obtained by using a resin mainly composed of a polyester-based polyurethane resin having a softening point of 80°C and a melting point temperature of 150°C as a raw material, and discharging the resin in a sheet shape and stretching the sheet so as to have a film thickness of 50 µm, a stress at 50% elongation of 0.5 MPa, and a strength at break of 26 MPa.

In the dimension in the short side direction of the adhesive material, the first adhesive resin layer was subjected to slit processing so as to be 1 cm, the second adhesive resin layer was subjected to slit processing so as to be 0.5 cm, and the base material was formed so as to be 1.2 cm.

In the dimension in the long side direction of the adhesive material, the first adhesive resin layer, the second adhesive resin layer, and the base material layer were all 50 cm.

The obtained adhesive resin layers were layered on the base material layer to obtain an adhesive material including the first adhesive resin layer, the base material layer, and the second adhesive resin layer.

Next, the bonding surface on one side of the adhesive material, that is, the first adhesive resin layer was disposed so as to be in contact with the first adherend, and the bonding surface of the adhesive material on the opposite side of the one side, that is, the second adhesive resin layer was disposed so as to be in contact with the second adherend. Then, thermal bonding was performed under the conditions of a temperature of 140°C, a pressure of 1 kg/cm², and a time of 10 seconds using a flat plate hot press machine to form a bonding portion, thereby obtaining a bonded article.

The peel strengths of the first and second adherends, the peel strength ratio between the first adherend and the second adherend, the surface area ratio between the second adhesive resin layer and the first adhesive resin layer, the dimensional ratio between the base material and the first adhesive resin layer in the short side direction of the adhesive material, and the peel strength of the bonding portion of the obtained bonded article were measured.

Next, the adhesion stability and aesthetic quality were evaluated according to the evaluation criteria in Table 1, and overall evaluation was performed according to the evaluation criteria in Table 2. Respective numerical values and evaluation results are shown in Table 3.

### (Example 2)

In the bonded article of Example 1, as the first adherend 2a, a nylon-coated woven fabric, that is, a fabric was obtained by weaving a taffeta fabric having a warp density of 236 yarns/2.54 cm and a weft density of 197 yarns/2.54 cm using 33 dtex-26 f nylon filament yarns for both warp fibers and weft fibers, and then coating the fabric with a polyurethane resin in an application amount of 43 g/m². The water resistance of the first adherend 2a measured on the basis of the method B specified in JIS L1092 (2009) 7.1.2 was 10,000 mmH₂O (98.1 kPa).

As the second adhesive resin layer 4b, a layer was obtained by applying a polyurethane-based moisture-curable reactive resin, that is, a polyurethane-based resin (melting point temperature: 100°C) having a viscosity of 5,000 mPa·s (120°C) onto a base material under the discharge conditions of a syringe temperature of 120°C and a nozzle temperature of 150°C using a discharge machine having a nozzle diameter of 0.3 mm.

The adhesive material 4 was obtained in which the dimension of the first adhesive resin layer 4a was 1.5 cm, the dimension of the second adhesive resin layer 4b was 0.7 cm, and the dimension of the base material was 1.5 cm in the short side direction of the adhesive material 4.

A bonded article was produced under the same conditions as in Example 1 except for the configurations of the adherend 2 and the adhesive material 4. Respective numerical values and evaluation results are shown in Table 3.

### (Example 3)

In the bonded article of Example 1, as the first adherend 2a, a coated nylon circular knitted fabric, that is, a knitted fabric was obtained by knitting an interlock structure knitted fabric using a 75 dtex-72 f nylon filament yarn with a double-sided circular knitting machine of 28G, and then performing relaxing, refining, dyeing, and finishing set, and coating the knitted fabric with a polyurethane resin in an application amount of 43 g/m². The water resistance of the first adherend 2a measured on the basis of the method B specified in JIS L1092 (2009) 7.1.2 was 8,000 mmH₂O (78.5 kPa) .

As the second adherend 2b, a nylon circular knitted fabric, that is, a knitted fabric was obtained by knitting an interlock knitted fabric using a 75 dtex-72 f nylon filament yarn with a double-sided circular knitting machine of 28G, and then performing relaxing, refining, dyeing, and finishing set.

The adhesive material 4 was obtained in which the dimension of the first adhesive resin layer 4a was 2.5 cm, the dimension of the second adhesive resin layer 4b was 1.5 cm, and the dimension of the base material was 2.4 cm in the short side direction of the adhesive material 4.

A bonded article was produced under the same conditions as in Example 1 except for the configurations of the adherend 2 and the adhesive material 4. Respective numerical values and evaluation results are shown in Table 3.

### (Example 4)

In the bonded article of Example 1, as the first adherend 2a, an olefin-based nonwoven fabric, that is, a nonwoven fabric was obtained by subjecting a spunbonded nonwoven fabric formed to have a distance between fibers of 16.3 µm, a thickness of 0.21 mm, a bulkiness of 3.5 cm³/g, an air permeability of 100 cm³/cm²/sec, a tensile strength of 126 N/5 cm, and a basis weight of 60 g/m² using polypropylene having a fiber diameter of 3.2 µm, to calendering at 80 degrees (upper)/60 degrees (lower).

Next, as the second adherend 2b, an olefin-based nonwoven fabric, that is, a spunbonded nonwoven fabric formed to have a distance between fibers of 16.3 um, a thickness of 0.21 mm, a bulkiness of 3.5 cm³/g, an air permeability of 100 cm³/cm²/sec, a tensile strength of 126 N/5 cm, and a basis weight of 60 g/m² using polypropylene having a fiber diameter of 3.2 µm was obtained.

In the configuration of the adhesive material 4, as the first adhesive resin layer 4a, an adhesive resin layer was obtained by using an olefin-based thermoplastic hot melt resin, that is, a resin mainly composed of a polypropylene resin having a softening point of 60°C and a melting point temperature of 90°C and having hot-melt adhesiveness, and discharging the resin in a sheet shape onto a release paper and stretching the sheet so as to have a film thickness of 100 µm by an extrusion method, and then separating the sheet from the release paper.

As the second adhesive resin layer 4b, an olefin-based thermoplastic hot melt resin was obtained by using the same raw material and production method as those of the first resin layer.

As the base material layer 4c, an olefin-based nonwoven fabric obtained by using the same raw material and production method as those of the first adherend 2a was used.

The adhesive material 4 was obtained in which the dimension of the first adhesive resin layer 4a was 1.5 cm, the dimension of the second adhesive resin layer 4b was 1.2 cm, and the dimension of the base material was 1.4 cm in the short side direction of the adhesive material 4.

A bonded article was produced under the same conditions as in Example 1 except for the configurations of the adherend 2 and the adhesive material 4. Respective numerical values and evaluation results are shown in Table 3.

### (Example 5)

In the second adhesive resin layer 4b of the bonded article of Example 3, a polyurethane-based moisture-curable reactive hot melt resin, that is, a resin (melting point temperature: 110°C) mainly composed of a polyurethane having a viscosity of about 12,000 mPa·s at 120°C and having hot-melt adhesiveness was used in the configuration of the adhesive material. As shown in Fig. 6, the resin was continuously discharged from a nozzle onto a surface of the base material layer on a side opposite to the first adhesive resin layer in a dot shape having a diameter of 1.0 mm and a thickness of 100 µm at a discharge temperature of 110°C from the dot end at intervals of 1 mm in each of the short side direction 4d of the adhesive material and the long side direction 4e of the adhesive material.

The dimension of the adhesive resin layer in the short side direction 4d', that is, the distance between the outermost edges of the adhesive material in the short side direction 4d was 1.5 cm, and the long side dimension 4e' of the adhesive resin layer, that is, the distance between the outermost edges of the adhesive material in the long side direction 4e was 50 cm.

A bonded article was produced under the same conditions as in Example 3 except for the configuration of the second adhesive resin layer 4b. Respective numerical values and evaluation results are shown in Table 3.

### (Comparative Example 1)

As the second adherend 2b, a nylon-coated woven fabric prepared by using the same nylon woven fabric material as that of the first adherend 2a in the bonded article of Example 2, and coating the nylon woven fabric material with a polyurethane resin in an application amount of 14 g/m² was used. The adhesive material 4 was obtained in which the dimension of the first adhesive resin layer 4a was 1.5 cm, the dimension of the second adhesive resin layer 4b was 2 cm, and the dimension of the base material was 1.5 cm in the short side direction of the adhesive material 4.

A bonded article was produced under the same conditions as in Example 1 except for the configurations of the adherend 2 and the adhesive material 4. Respective numerical values and evaluation results are shown in Table 3.

### (Comparative Example 2)

In the bonded article of Example 3, the second adherend 2b in Example 3, that is, the nylon circular knitted fabric was used as the first adherend 2a. As the second adherend 2b, the first adherend 2a in Example 3, that is, the coated nylon circular knitted fabric was used.

In the adhesive material 4, the second adhesive resin layer 4b and the base material layer 4c were not used, and the adhesive material 4 was composed of only the first adhesive resin layer 4a, that is, the polyurethane-based thermoplastic hot melt resin.

The adhesive material 4 was obtained in which the dimension of the first adhesive resin layer 4a was 5 cm in the short side direction of the adhesive material 4.

A bonded article was produced under the same conditions as in Example 1 except for the configurations of the adherend 2 and the adhesive material 4. Respective numerical values and evaluation results are shown in Table 3.

### (Comparative Example 3)

In the bonded article of Example 1, as the first adherend 2a, a material was obtained by coating a release paper, that is, glassine paper with a non-solvent silicone resin as a release treatment, and then heating in a drying furnace to cure the silicone resin.

As the second adherend 2b, the same material as that of the first adherend 2a was used.

Next, in the configuration of the adhesive material 4, an epoxy-based hot melt resin, that is, a solvent-soluble resin (MEK 70%) having a softening point of 180°C and a melt viscosity of 250 (150°C, ICI viscometer mPa·s) was used as the first adhesive resin layer 4a. The adhesive material 4 was composed of only the first adhesive resin layer 4a without using the second adhesive resin layer 4b and the base material layer 4c.

The adhesive material 4 was obtained in which the dimension of the first adhesive resin layer 4a was 5 cm in the short side direction of the adhesive material 4.

A bonded article was produced under the same conditions as in Example 1 except for the configurations of the adherend 2 and the adhesive material 4. Respective numerical values and evaluation results are shown in Table 3.

### (Comparative Example 4)

In the bonded article of Comparative Example 1, a nylon double woven fabric having a fineness of 70 dtex was used for the base material layer 4c, double weave joint was disposed at the center of the adhesive material in the short side direction 4d, and double weave joint was continuously disposed in the long side direction 4e of the adhesive material to obtain the base material layer 4c. The first adhesive resin layer 4a was disposed on one of the outermost surfaces of the obtained base material layer 4c, and the second adhesive resin layer 4b was disposed on the opposite outermost surface. The first adhesive resin layer, the second adhesive resin layer, and the base material layer 4c were each subjected to slit processing so as to be 1.5 cm in the dimension in the short side direction of the adhesive material to obtain an adhesive material 4.

A bonded article was produced under the same conditions as in Comparative Example 1 except for the above configuration. Respective numerical values and evaluation results are shown in Table 3.

**[Table 3-1]**

| | | Example 1 | Example 2 | Example 3 | Example 4 | Example 5 |
|---|---|---|---|---|---|---|
| Configuration of adherend | First adherend | Nylon woven fabric | Nylon woven fabric/urethane coating | Nylon circular knitted fabric/urethane coating | Olefin-based nonwoven fabric calendering | Nylon circular knitted fabric/urethane coating |
| | Second adherend | Nylon woven fabric | Nylon woven fabric | Nylon circular knitted fabric | Olefin-based nonwoven fabric | Nylon circular knitted fabric |
| Configuration of adhesive material | First adhesive resin layer | Polyurethane-based thermoplastic hot melt resin | Polyurethane-based thermoplastic hot melt resin | Polyurethane-based thermoplastic hot melt resin | Olefin-based thermoplastic hot melt resin | Polyurethane-based thermoplastic hot melt resin |
| | Second adhesive resin layer | Polyurethane-based thermoplastic hot melt resin | Polyurethane-based moisture-curable reactive resin | Polyurethane-based thermoplastic hot melt resin | Olefin-based thermoplastic hot melt resin | Dot application of polyurethane-based moisture-curable reactive hot melt resin |
| | Base material layer | Urethane film | Jrethane film | Urethane film | Olefin-based nonwoven fabric | Urethane film |
| | Short side direction dimension (cm) of first adhesive resin layer | 1.0 | 1.5 | 2.5 | 1.5 | 2.5 |
| | Short side direction dimension (cm) of second adhesive resin layer | 0.5 | 0.7 | 1.5 | 1.2 | 1.5 |
| | Short side direction dimension (cm) of base material | 1.2 | 1.5 | 2.4 | 1.4 | 2.4 |
| Measurement results | Peel strength of first adherend (N/cm) | 10.5 | 15.0 | 5.5 | 15.0 | 5.5 |
| | Peel strength of second adherend (N/cm) | 33.5 | 22.5 | 115.5 | 15.5 | 115.5 |
| | Peel strength ratio between first adherend and second adherend | 31.3% | 66.7% | 4.8% | 96.8% | 4.8% |
| | Surface area ratio between second adhesive resin layer and first adhesive resin layer | 50.0% | 46.7% | 60.0% | 80.0% | 60.0% |
| | Dimensional ratio between base material and first adhesive resin layer in short side direction of adhesive material | 120.0% | 100.0% | 96.0% | 93.3% | 96.0% |
| | Peel strength of bonded article (N/cm) | 24.5 | 20.5 | 16.0 | 13.0 | 18.0 |
| Evaluation results | Adhesion stability | 3 | 3 | 2 | 1 | 2 |
| | Aesthetic quality (average) | 3 | 2 | 1 | 1 | 3 |
| | ***"***(1) Degree of level difference or contour of end portion | | 3 | 1 | 1 | 3 |
| | ***"***(2) Appearance quality | 3 | 1 | 1 | 1 | 3 |
| | Overall evaluation | 6 | 5 | 3 | 2 | 5 |

**[Table 3-2]**

| | | Comparative Example 1 | Comparative Example 2 | Comparative Example 3 | Comparative Example 4 |
|---|---|---|---|---|---|
| Configuration of adherend | First adherend | Nylon woven fabric/urethane coating | Nylon circular knitted fabric | Release paper | Nylon woven fabric/urethane coating |
| | Second adherend | Nylon woven fabric/urethane coating | Nylon circular knitted fabric/urethane coating | \|Release paper | Nylon woven fabric/urethane coating |
| Configuration of adhesive material | First adhesive resin layer | Polyurethane-based thermoplastic hot melt resin | Polyurethane-based thermoplastic hot melt resin | Epoxy-based hot melt resin | Polyurethane-based thermoplastic hot melt resin |
| | Second adhesive resin layer | Polyurethane-based moisture-curable reactive resin | Absent | Absent | Polyurethane-based thermoplastic hot melt resin |
| | Base material layer | Jrethane film | Absent | Absent | Nylon double woven fabric |
| | Short side direction dimension (cm) of first adhesive resin layer | 1.5 | 5.0 | 5.0 | 1.5 |
| | Short side direction dimension (cm) of second adhesive resin layer | 2.0 | Absent | Absent | 1.5 |
| | Short side direction dimension (cm) of base material | 1.5 | Absent | Absent | 1.5 |
| Measurement results | Peel strength of first adherend (N/cm) | 10.5 | 115.5 | 1.0 | 10.5 |
| | Peel strength of second adherend (N/cm) | 10.5 | 5.5 | 1.0 | 10.5 |
| | Peel strength ratio between first adherend and second adherend | 100.0% | 2100.0% | 100.0% | 100.0% |
| | Surface area ratio between second adhesive resin layer and first adhesive resin layer | 133.3% | - | - | 100.0% |
| | Dimensional ratio between base material and first adhesive resin layer in short side direction of adhesive material | 100.0% | - | - | 100.0% |
| | Peel strength of bonded article (N/cm) | 5.4 | 4.5 | 0.9 | 7.0 |
| Evaluation results | 1 Adhesion stability | -1 | -2 | -3 | -1 |
| | Aesthetic quality (average) | -1 | -2 | -3 | -1 |
| | " (1) Degree of level difference or contour of end portion | -1 | -3 | -3 | -1 |
| | " (2) Appearance quality | -1 | -1 | -3 | -1 |
| | Overall evaluation | -2 | -4 | -6 | -2 |

In the bonded articles of Examples 1 to 5, the surface area 5b of the second adhesive resin layer was smaller than the surface area 5a of the first adhesive resin layer under the relationship in which the peel strength of the first adherend 2a was lower than the peel strength of the second adherend 2b, so that the bonded articles were excellent in adhesion stability.

In the bonded articles of Examples 1 to 3, the ratio between the second adhesive resin layer 4b and the surface area 5a of the first adhesive resin layer was set within a preferred range, so that the bonded articles were more excellent in adhesion stability.

In the bonded articles of Examples 1 to 2, the peel strength ratio between the first adherend 2a and the second adherend 2b and the dimensional ratio between the base material and the first adhesive resin layer 4a in the short side direction of the adhesive material 4 were set within preferred ranges, so that the bonded articles were more excellent in adhesion stability and aesthetic quality.

In the bonded article of Comparative Example 1, the surface area 5b of the second adhesive resin layer was larger than the surface area 5a of the first adhesive resin layer, and stress was concentrated on the interface between the base material layer 4c and the second adhesive resin layer 4b at the time of peeling, so that the bonded article was poor in adhesion stability.

In the bonded article of Comparative Example 2, the peel strength of the first adherend 2a was equal to the peel strength of the second adherend 2b, and the adhesive material 4 was composed of only the first adhesive resin layer 4a, that is, a single-layer adhesive layer was used, so that stress distribution did not work at the time of peeling, and the adhesion stability was poor due to breakage of the resin itself.

In the bonded article of Comparative Example 3, in addition to the configuration of Comparative Example 2, the material of the adherend 2 and the component of the adhesive resin layer were changed to an aspect different from the preferred aspect, so that the bonded article was inferior in adhesion stability and aesthetic quality due to the low peel strength of the adherend 2 itself and the curing of the adhesive resin layer.

In the bonded article of Comparative Example 4, the surface area 5b of the second adhesive resin layer and the surface area 5a of the first adhesive resin layer were the same, and the dimensions of the first adhesive resin layer 4a and the second adhesive resin layer 4b and the dimension of the base material layer 4c in the short side direction were the same. As a result, not only stress was concentrated on the interface between the base material layer 4c and the second adhesive resin layer 4b at the time of peeling, but also hardening of the texture occurred due to the thickness of the base material layer, and the bonded article was inferior in adhesion stability and aesthetic quality.

That is, the more requirements of the invention are satisfied, the more comprehensively the bonded article of the present invention becomes excellent.

### INDUSTRIAL APPLICABILITY

The present invention can be used as a bonded article having excellent adhesive strength and excellent aesthetic quality and productivity.

### DESCRIPTION OF REFERENCE SIGNS

1: Bonded article
2: Adherend
2a: First adherend
2b: Second adherend
3: Bonding portion
4: Adhesive material
4a: First adhesive resin layer
4b: Second adhesive resin layer
4c: Base material layer
4d: Short side direction of adhesive material
4d': Short side direction of adhesive resin layer
4e: Long side direction of adhesive material
4e': Long side direction of adhesive resin layer
5a: Surface area of first adhesive resin layer
5b: Surface area of second adhesive resin layer
6: Bonding surface

## Claims

1. A bonded article comprising at least a first adherend, a second adherend, and an adhesive material interposed between the first adherend and the second adherend,
wherein the adhesive material includes at least a first adhesive resin layer, a second adhesive resin layer, and a base material layer interposed between the first adhesive resin layer and the second adhesive resin layer,
the first adhesive resin layer is in contact with the first adherend,
the second adhesive resin layer is in contact with the second adherend,
a peel strength of the first adherend measured on the basis of JIS L1086 (2020) 7.10 is lower than a peel strength of the second adherend, and
a surface area of the second adhesive resin layer is smaller than a surface area of the first adhesive resin layer.

2. The bonded article according to claim 1, wherein a ratio of the surface area of the second adhesive resin layer to the surface area of the first adhesive resin layer is 10% or more and 70% or less.

3. The bonded article according to claim 1 or 2, wherein in the first adherend and the second adherend, a ratio of the peel strength of the first adherend to the peel strength of the second adherend measured on the basis of JIS L1086 (2020) 7.10 is 50 or more and 90% or less.

4. The bonded article according to any one of claims 1 to 3, wherein the first adherend and the second adherend are selected from at least a fiber woven or knitted fabric, a nonwoven fabric, and a film.

5. The bonded article according to any one of claims 1 to 4, wherein a ratio of a dimension of the base material layer to a dimension of the first adhesive resin layer in a short side direction of the adhesive material is 100% or more and 150% or less.
